# EUROPÄISCHE PATENTSCHRIFT

(11) **EP 1 397 265 B1**
(45) Veröffentlichungstag und Bekanntmachung des Hinweises auf die Patenterteilung: **20.01.2010**
(21) Anmeldenummer: 02732361.7
(22) Anmeldetag: 30.03.2002
(51) Int. Cl.: B60H 1/32

(54) **KLIMAANLAGE**
AIR CONDITIONING SYSTEM
INSTALLATION DE CLIMATISATION

(30) Priorität: 16.05.2001 DE 10123830
(43) Veröffentlichungstag der Anmeldung: 17.03.2004
(73) Patentinhaber: ROBERT BOSCH GMBH, 70442 Stuttgart (DE)
(72) Erfinder: SATZGER, Peter, 70825 Korntal (DE)
(86) Internationale Anmeldenummer: PCT/DE2002/001164
(87) Internationale Veröffentlichungsnummer: WO 2002/092368

(56) Entgegenhaltungen:
- EP-A- 0 945 291
- DE-A- 3 635 353
- DE-A- 19 806 654

## Beschreibung

### Stand der Technik

Die Erfindung geht von einer Klimaanlage nach dem Oberbegriff des Anspruchs 1 aus.

Der Einsatz verbrauchsoptimierter Brennkraftmaschinen in Fahrzeugen wirkt sich auch auf deren Klimatisierung aus, indem in bestimmten Betriebsbereichen, z.B. bei niedrigen Außentemperaturen während der Startphase, nicht mehr genügend Wärme an die Kühlflüssigkeit abgegeben wird, um das Fahrzeug komfortabel zu beheizen. Es sind deshalb Zuheizer notwendig, um den Komfort bei niedrigen Temperaturen sicherzustellen bzw. bei Bedarf auch die Fahrzeugscheiben enteisen zu können. Als Zuheizer kann auch eine Klimaanlage dienen, zumal zunehmend mehr Fahrzeuge standardmäßig mit einer Klimaanlage ausgestattet werden. Die Klimaanlage wird bei niedrigen Temperaturen durch eine Umkehr des Kältemittelkreislaufs als Wärmepumpe genutzt. Diese verbraucht wenig Energie und besitzt ein spontanes Ansprechverhalten bei hoher Heizleistung.

Zudem wird zukünftig in den Klimaanlagen das herkömmliche Kältemittel R134a durch das natürliche Kältemittel Kohlendioxid (CO₂) ersetzt werden, das höhere Heiztemperaturen ermöglicht als R134a. In Klimaanlagen mit dem Kältemittel Kohlendioxid erfolgt die Wärmeabgabe nicht unter Kondensation des Kältemittels in einem Kondensator, sondern bei einem überkritischen Druck in einem Gaskühler. Wird diese Klimaanlage durch Kreislaufumkehr als Wärmepumpe genutzt, erfolgt die Wärmeaufnahme über den Gaskühler. Ein wesentlicher Nachteil einer solchen Wärmepumpe besteht allerdings darin, dass der Gaskühler bei niedrigen Außentemperaturen auf der Luftseite vereist. Der in der Luftströmung in der Regel nachgeschaltete Kühler der Brennkraftmaschine wird dadurch nur unzureichend von Kühlluft durchströmt, sodass dann eine ausreichende Kühlung der Brennkraftmaschine nicht gewährleistet ist.

Aus der DE 198 06 654 A1 ist eine Klimaanlage für Fahrzeuge bekannt, die als Kältemittel Kohlendioxid verwendet, das in einem Kältemittelkreislauf in einem phasenweise flüssigen bzw. gasförmigen Zustand zirkuliert. Ein Verdichter fördert das Kältemittel in einem Kühlbetrieb über einen Gaskühler, einen inneren Wärmetauscher, eine Expansionseinrichtung, einen Verdampfer und über den inneren Wärmetauscher bei niedrigem Druck zur Saugseite zurück. Dabei gibt das Kältemittel im Gaskühler einen Teil der Wärme ab, die durch die Kompression im Verdichter erzeugt wurde. Einen weiteren Teil überträgt es im inneren Wärmetauscher auf das zur Saugseite zurückströmende kühlere Kältemittel. In der Expansionseinrichtung wird das Kältemittel auf eine Temperatur expandiert, die unterhalb der Umgebungstemperatur liegt, sodass es im Verdampfer der Luft, die in das Klimagerät einströmt, Wärme entziehen kann und gegebenenfalls die Luft dadurch gleichzeitig trocknet. Die Luft wird dann durch einen nachgeschalteten Heizungswärmetauscher auf die gewünschte Temperatur gebracht.

Durch Umschalten von Strömungsverteilern fördert der Verdichter das Kältemittel während eines Heizbetriebs zunächst über den Verdampfer, der nun in umgekehrter Richtung durchströmt wird. Hierbei gibt das Kältemittel einen Teil der durch die Kompression erzeugte Wärme an die in das Klimagerät einströmende Luft ab. Diese erwärmt somit den Fahrgastraum und enteist die Scheiben. Ist in bestimmten Betriebsphasen der Brennkraftmaschine der Heizungswärmetauscher kühler als die ihn durchströmende Luft, wird ferner Wärme an den Kühlflüssigkeitskreislauf der Brennkraftmaschine abgegeben, was zu einem verzögerten Wärmeeintrag in den Fahrzeuginnenraum führt. Da der Luft keine Feuchtigkeit entzogen wird und vielmehr damit gerechnet werden muss, dass sie Restfeuchtigkeit aus dem Verdampfer aufnimmt, ist zu befürchten, dass sich später die Feuchtigkeit aus der gesättigten Luft an den kalten Fahrzeugscheiben niederschlägt und die Sicht beeinträchtigt.

Nach dem Verdampfer wird das Kältemittel in der Expansionseinrichtung auf eine tiefere Temperatur entspannt, sodass es auf seinem Weg zur Saugseite des Verdichters in einem Koppelwärmetauscher, der zwischen dem Kühlflüssigkeitskreislauf und dem Kältemittelkreislauf angeordnet ist, Wärme aus dem Kühlflüssigkeitskreislauf aufnehmen kann. Durch eine solche Klimaanlage ist es möglich, auf Kosten der Brennkraftmaschine die Temperatur im Fahrgastraum bei kalten Witterungsbedingungen zu steigern.

Ferner sind aus der EP 0 945 291 A1 eine Vorrichtung und ein Verfahren zum Heizen und Kühlen eines Nutzraums eines Kraftfahrzeugs bekannt. Das Kältemittel wird im Heizbetrieb von einem Verdichter komprimiert und gelangt über ein 3/2-Wegeventil zu einem Verdampfer, in dem es einen Teil der durch die Kompression erzeugten Wärme an die kältere Fahrzeuginnenraumluft abgibt. Vom Verdampfer strömt das Kältemittel zu einer Expansionseinrichtung, in der es so weit abgekühlt wird, dass es an einem nachfolgend angeordneten Gaskühler Wärme aus der Umgebungsluft aufnehmen kann. Weitere Wärme wird dem Kältemittel in einem nachgeschalteten Abgaswärmetauscher zugeführt, der mit heißen Abgasen der Brennkraftmaschine beaufschlagt wird.

Vom Abgaswärmetauscher gelangt das Kältemittel wieder zum Verdichter, wodurch der Kältemittelkreislauf geschlossen ist. Wird das Kältemittel in der Expansionseinrichtung auf eine Temperatur expandiert, die unterhalb der Umgebungstemperatur liegt, kann die den Gaskühler durchströmende Luft auf eine Temperatur unterhalb der Sättigüngstemperatur abgekühlt werden. In diesem Fall kondensiert Wasser aus der angesaugten Umgebungsluft. Liegt die Temperatur unterhalb der Sublimationslinie des Wassers, geht dieses in den festen Zustand über und der Gaskühler vereist. Da der Gaskühler in der Regel einem Kühler der Brennkraftmaschine in Strömungsrichtung der Luft vorgeschaltet ist, wird durch ein Vereisen des Gaskühlers eine ordnungsgemäße Kühlung der Brennkraftmaschine gefährdet. Um ein zu starkes Vereisen zu vermeiden, wird daher bei kritischen Umgebungsbedingungen über ein 3/2-Wegeventil eine Bypassleitung geöffnet, sodass der Gaskühler kurz geschlossen ist. Das Kältemittel strömt unter Umgehung des Gaskühlers direkt zum Abgaswärmetauscher und von dort zur Saugseite des Verdichters.

Die durch den Verdampfer strömende Fahrzeuginnenraumluft wird zwar erwärmt, aber es wird ihr nicht wie im Kühlbetrieb die Feuchtigkeit entzogen. Vielmehr wird die warme Luft die im Verdampfer zurückgebliebene Restfeuchtigkeit aufnehmen und an den kälteren Fahrzeugscheiben im Fahrzeuginnenraum als Beschlag abgeben. Eine ausreichende Entfeuchtung der Luft kann in einem solchen System nur durch zusätzliche Wärmetauscher im Klimagerät erreicht werden, wozu ein zusätzliches Bauvolumen erforderlich ist, das aber in vielen Fahrzeugen nicht vorhanden ist.

Aus der DE 198 18 649 A1 ist eine gattungsgemäße Klimaanlage bekannt, die in einer Betriebsart als Zusatzheizung arbeitet, um in der Warmlaufphase der Brennkraftmaschine, wenn diese noch nicht genügend Wärme liefern kann, zusätzliche Wärme zum Aufheizen der Brennkraftmaschine und des Fahrzeuginnenraums bereitzustellen. Die Klimaanlage besteht wenigstens aus einem Kondensator bzw. Gaskühler, einem Expansionsventil, einem Verdampfer und einem Kompressor sowie einer den Kondensator überbrückenden Bypassleitung mit einem Bypassventil. Ferner ist im Kältemittelkreislauf der Klimaanlage stromabwärts des Verdichters ein Koppelwärmetauscher vorgesehen, der auf der Sekundärseite von dem Kühlmittel der Brennkraftmaschine durchströmt wird und und im Kühlmittelkreislauf vor der Brennkraftmaschine geschaltet ist. Im Kältemittelkreislauf kann der Koppelwärmetauscher durch eine Bypassleitung mit Schaltventilen überbrückt werden. Beim Kaltstart der Brennkraftmaschine fördert der Verdichter das durch die Kompression erwärmte Kältemittel durch den Koppelwärmetauscher und die zum Gaskühler bzw. Kondensator parallel geschaltete Bypassleitung sowie über das Expansionsventil zum Verdampfer und zurück zum Verdichter. Mit steigender Kühlmitteltemperatur der Brennkraftmaschine kann immer weniger Wärme im Koppelwärmetauscher vom Kältemittel auf das Kühlmittel übertragen werden, sodass die Restwärme im Verdampfer an die Luft zum Erwärmen des Fahrzeuginnenraums abgegeben wird. Nach Erreichen der Betriebstemperatur der Brennkraftmaschine und einer gewünschten Temperatur im Fahrgastinnenraum wird der Koppelwärmetauscher überbrückt und zur Kühlung bzw. zum Trocknen der Frischluft der Gaskühler bzw. der Kondensator zugeschaltet.

### Vorteile der Erfindung

Nach der Erfindung ist der Koppelwärmetauscher auf der Seite des Kältemittelkreislaufs auf der Druckseite des Verdichters vor dem Gaskühler angeordnet. Parallel zum Gaskühler ist eine Bypassleitung geschaltet, wobei ein Schaltventil in der Bypassleitung und jeweils ein Schaltventil am Eingang bzw. Ausgang des Gaskühlers den Durchfluss durch den Gaskühler und die Bypassleitung in Abhängigkeit von Betriebsparametern steuern. Der Verdampfer dient im Heizbetrieb als Wärmequelle für den Kältemittelkreislauf.

Bei der erfindungsgemäßen Klimaanlage strömt das Kältemittel im Heizbetrieb und im Kühlbetrieb in gleicher Richtung durch die Expansionseinrichtung in Form eines Expansionsventils und den Verdampfer. Dadurch muss der Verdampfer nicht zusätzlich für den Betrieb zur Wärmeabgabe ausgelegt werden, was immer sowohl für den Heiz- als auch für den Kühlbetrieb eine Kompromissauslegung darstellt. Im Heizbetrieb arbeitet die Klimaanlage als Wärmepumpe, wobei der Verdampfer als Wärmequelle dient, indem er die bei der Entfeuchtung der Luft anfallende Wärme nutzt. Danach komprimiert der Verdichter das Kältemittel. Die dabei erzeugte Wärme wird über den Koppelwärmetauscher an die Kühlflüssigkeit des Kühlflüssigkeitskreislaufs abgegeben, der erfindungsgemäß zwischen der Brennkraftmaschine und dem Heizungswärmetauscher. und in vorteilhafter Weise in der Nähe eines Heizungswärmetauschers für den Fahrzeuginnenraum angeordnet ist. Dadurch kann eine große Wärmemenge in die Kühlflüssigkeit eingekoppelt und ohne nennenswerte Verzögerung sowie Verluste sowohl zum Beheizen des Fahrzeuginnenraums als auch zum schnellen Erwärmen der Brennkraftmaschine auf eine optimale Betriebstemperatur genutzt werden. Hierzu wird kein zusätzlicher Bauraum beansprucht. Die im Verdampfer getrocknete Luft erwärmt sich beim Durchströmen des Heizungswärmetauschers, wodurch die relative Luftfeuchtigkeit weiter sinkt, sodass sich kein Beschlag an den Fahrzeugscheiben bilden kann.

Parallel zum Heizungswärmetauscher ist eine Bypassleitung angeordnet, sodass je nach Wärmeanforderung der Volumenstrom der Kühlflüssigkeit durch ein temperaturgesteuertes oder ein durch die Heizungsregelung gesteuertes Heizungsregelventil auf den Heizungswärmetauscher und die Bypassleitung aufgeteilt werden kann. Gegebenenfalls kann im Kühlbetrieb oder, um die Brennkraftmaschine in der Startphase schneller auf eine optimale Betriebstemperatur aufzuheizen, der gesamte Volumenstrom durch die Bypassleitung fließen.

Gemäß einer Ausgestaltung der Erfindung wird vorgeschlagen, dass im Kältemittelkreislauf vor dem Koppelwärmetauscher ein Drosselventil vorgesehen ist. Dadurch kann der Gegendruck des Verdichters angehoben werden, wodurch eine größere Wärmeeinkopplung durch den Verdichter möglich ist. Das Kältemittel wird durch das Drosselventil auf einen zulässigen maximalen Druck im Koppelwärmetauscher entspannt. Dieser arbeitet zum Verbessern des Wirkungsgrads zweckmäßigerweise im Gegenstromprinzip. Außerdem ist es vorteilhaft, den Koppelwärmetauscher in Mikrostruktur herzustellen. Ein solcher Wärmetauscher ist für hohe Drücke geeignet und in kompakter Bauweise kostengünstig herzustellen. Nähere Einzelheiten zu wärmetauschern in Mikrostruktur ergeben sich aus der DE 199 10 985 A

Im Kühlbetrieb fördert der Verdichter das Kältemittel ebenfalls über den Koppelwärmetauscher, wo es durch die Kühlflüssigkeit gekühlt wird. Danach gelangt es in den Gaskühler, in dem es durch die Umgebungsluft weiter heruntergekühlt wird. Zur weiteren Abkühlung wird zweckmäßigerweise in Strömungsrichtung hinter dem Gaskühler ein innerer Wärmetauscher angeordnet, der im Gegenstromprinzip in der einen Richtung von dem verdichteten Kältemittel und in der entgegengesetzten Richtung von dem entspannten Kältemittel nach dem Verdampfer durchströmt wird. Parallel zum inneren Wärmetauscher ist eine Bypassleitung mit einem Sicherheitsventil geschaltet. Das so gekühlte Kältemittel kühlt sich beim Expandieren in einer Expansionseinrichtung, z.B. in Form eines Expansionsventils, auf die gewünschte Temperatur ab, sodass das Kältemittel Wärme aufnehmen kann, wenn es danach den Verdampfer durchströmt. Das Kältemittel strömt nun über den inneren Wärmetauscher zur Saugleitung des Verdichters zurück.

Im Heizbetrieb, in dem der Gaskühler über eine Bypassleitung kurzgeschlossen ist, besteht unter kritischen Bedingungen die Möglichkeit, dass die Temperatur und damit der Druck des Kältemittels am Verdampfer unter einen bestimmten Wert fällt, wodurch die Verdichtungsendtemperatur des Kältemittels einen maximal zulässigen Wert überschreiten kann. Um dies zu verhindern, wird das Sicherheitsventil in der Bypassleitung zum inneren Wärmetauscher geöffnet, sodass der innere Wärmetauscher kurzgeschlossen ist. Dadurch wird das zum Verdichter zurückströmende Kältemittel nicht zusätzlich erwärmt und die Verdichtungsendtemperatur bewegt sich in den zulässigen Grenzen.

Reicht der Verdampfer als Wärmequelle im Heizbetrieb nicht aus, ist es vorteilhaft, einen weiteren Verdampfer vorzusehen, der nicht der Heizluft für den Fahrzeuginnenraum, sondern der Außenluft ausgesetzt ist. Zusätzlich durch die größere Wärmeeinkopplung wird dadurch erreicht, dass selbst bei einer Vereisung des zusätzlichen Verdampfers mit keinen Folgeschäden für die Brennkraftmaschine zu rechnen ist.

Beim Wechsel vom Kühlbetrieb auf den Heizbetrieb muss das Kältemittel, das sich im Gaskühler im flüssigen Zustand befindet, in den arbeitenden Bereich der Anlage gefördert werden. Hierzu werden das Schaltventil am Zulauf zum Gaskühler und das Schaltventil in der Bypassleitung des Gaskühlers so lange geschlossen, während das Schaltventil am Ausgang des Gaskühlers geöffnet wird, bis der Druck am Austritt des Verdichters einen oberen Sollwert erreicht hat. Danach öffnet das Schaltventil in der Bypassleitung und das Schaltventil am Ausgang des Gaskühlers schließt, bis der Druck am Austritt des Verdichters auf einen unteren Sollwert abgefallen ist. Gegebenenfalls muss dieser Vorgang nochmals wiederholt werden. Zur Vereinfachung der Klimaanlage kann es vorteilhaft sein, das Schaltventil am Ausgang des Gaskühlers als Rückschlagventil auszubilden.

### Zeichnung

Weitere Vorteile ergeben sich aus der folgenden Zeichnungsbeschreibung. In der Zeichnung sind Ausführungsbeispiele der Erfindung dargestellt.

Es zeigen:

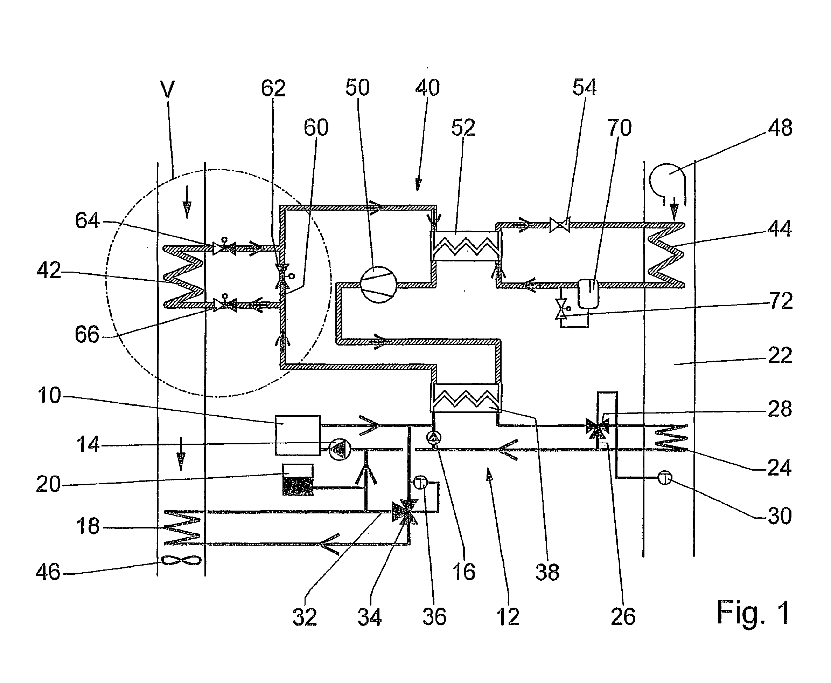

- Fig. 1: eine schematische Darstellung einer Klimaanlage im Heizbetrieb,
- Fig. 2: eine Variante zu Fig.1 mit mehreren Schaltventilen,
- Fig. 3: eine schematische Darstellung einer Klimaanlage im Kühlbetrieb,
- Fig. 4: eine Variante zu Fig.2 mit einem Zusatzverdampfer,
- Fig. 5: eine Variante zu einer Einzelheit entsprechen der Linie V in Fig. 1 und
- Fig. 6: eine Variante zu einer Einzelheit entsprechen der Linie VI in Fig. 2.

### Beschreibung der Ausführungsbeispiele

Die erfindungsgemäße Klimaanlage umfasst einen Kühlflüssigkeitskreislauf 12 und einen Kältemittelkreislauf 40. Der Strömungsverlauf der Medien ist jeweils durch Pfeile dargestellt. Im Kühlflüssigkeitskreislauf 12 fördert die Kühlflüssigkeitspumpe 14 Kühlflüssigkeit durch eine Brennkraftmaschine 10 und von dort zu einem Kühler 18, der mit einem Lüfter 46 zusammenarbeitet. Vom Kühler 18 strömt die Kühlflüssigkeit zur Kühlflüssigkeitspumpe 14 zurück. Parallel zum Kühler 18 ist eine Bypassleitung 32 vorgesehen. Ein Dreiwegeventil 34, das an der Abzweigung der Bypassleitung 32 angeordnet ist und mittels eines Temperatursensors 36 in Abhängigkeit von der Temperatur der Kühlflüssigkeit angesteuert wird, verteilt die Kühlflüssigkeitsströme auf den Kühler 18 und die Bypassleitung 32. An dem Kühlflüssigkeitskreislauf 12 ist ein Ausgleichsgefäß 20 angeordnet, um temperaturbedingte Volumenänderungen der Kühlflüssigkeit auszugleichen.

Ferner umfasst der Kühlflüssigkeitskreislauf 12 einen Heizungswärmetauscher 24, der in einem Klimagerät 22 angeordnet ist. Ein Heizungsregelventil 28 regelt den Zustrom der Kühlflüssigkeit zum Heizungswärmetauscher 24 in Abhängigkeit von der Temperatur der in den Fahrzeuginnenraum strömenden Luft, indem es eine parallel zum Heizungswärmetauscher 24 geschaltete Bypassleitung 26 öffnet bzw. schließt. Zu diesem Zweck ist hinter dem Heizungswärmetauscher 24 ein Temperatursensor 30 vorgesehen.

In Betriebsbereichen der Brennkraftmaschine 10, in denen die Wärme der Kühlflüssigkeit zum Beheizen des Fahrzeuginnenraums nicht ausreicht, z.B. in der Startphase der Brennkraftmaschine 10 bei niedrigen Umgebungstemperaturen, wird zusätzlich Wärme über einen Koppelwärmetauscher 38 aus dem Kältemittelkreislauf 40 in den Kühlflüssigkeitskreislauf 12 eingekoppelt. Der Koppelwärmetauscher 38 ist im Kühlflüssigkeitskreislauf 12 zwischen der Brennkraftmaschine 10 und dem Heizungswärmetauscher 24 und im Kältemittelkreislauf 40 zwischen einem Verdichter 50 und einem Gaskühler 42 angeordnet. Er wird im Gegenstromprinzip einerseits vom Kühlmittel und andererseits von Kältemittel durchströmt. Um die durch den Koppelwärmetauscher 38 in den Kühlflüssigkeitskreislauf 12 eingekoppelte Wärmemenge bevorzugt dem Heizungswärmetauscher 24 zuzuführen, ist der Kühlflüssigkeitskreislauf 12 über eine zusätzliche, regelbare Kühlflüssigkeitspumpe 16 im Bereich zwischen der Brennkraftmaschine 10 und dem Koppelwärmetauscher 38 kurz geschlossen.

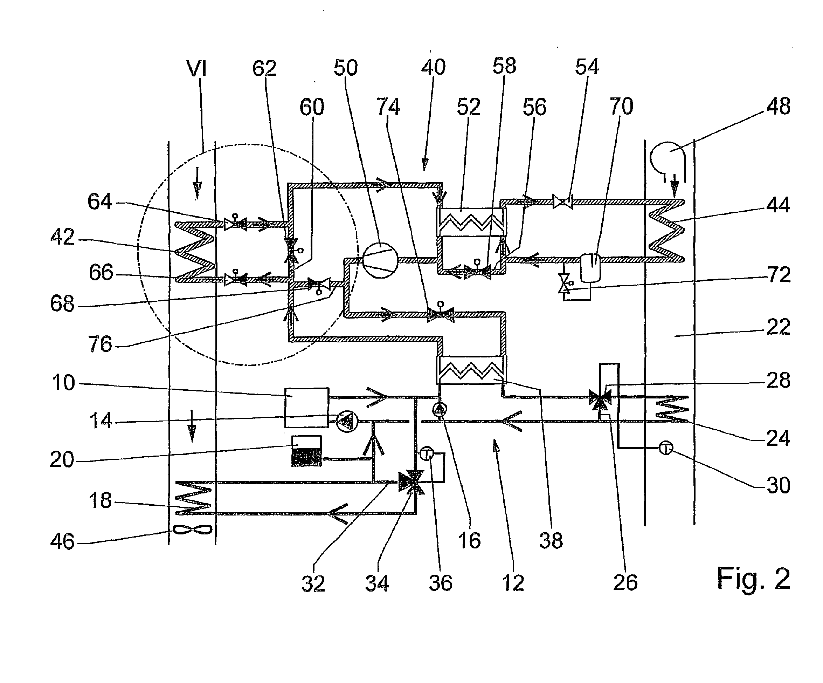

Der Verdichter 50 komprimiert das Kältemittel auf Hochdruck. Dabei erhitzt es sich und strömt dann in den Koppelwärmetauscher 38, in dem es an die Kühlflüssigkeit Wärme abgibt. Von dort strömt es im Heizbetrieb am Gaskühler 42 vorbei durch eine Bypassleitung 60 mit einem geöffneten Schaltventil 62 zu einem inneren Wärmetauscher 52, in dem ihm noch weitere Wärme entzogen wird. Danach wird das Kältemittel in einer Expansionseinrichtung in Form eines Expansionsventils 54 auf Verdampfungsdruck entspannt, wobei es sich stark abkühlt, so dass es beim Durchströmen des nachfolgend angeordneten Verdampfers 44 die beim Trocknen der in das Klimagerät 22 einströmenden Luft anfallende Wärme aufnehmen kann. Die Luft wird von einem Gebläse 48 aus der Umgebung oder dem Fahrzeuginnenraum angesaugt und durch das Klimagerät 22 mit dem Verdampfer 44 und dem nachgeschalteten Heizungswärmetauscher 24 gefördert. Das zum Verdichter 50 zurückströmende gasförmige Kältemittel scheidet in einem Sammler 70 Flüssigkeit aus, die über ein Ventil 72 oder eine Bohrung in der Austrittsleitung des Sammlers 70 abgeleitet wird. Ferner nimmt es im inneren Wärmetauscher 52 noch weitere Wärme auf und wird wieder durch den Verdichter 50 auf die zulässige Verdichtungsendtemperatur verdichtet. Wenn die Temperatur des Kältemittels nach dem Verdichter 50 über einen bestimmten Wert steigt, wird mittels eines Sicherheitsventils 58 eine Bypassleitung 56 zum inneren Wärmetauscher 52 geöffnet (Fig. 2), um die Verdichtungsendtemperatur in zulässigen Grenzen zu halten.

Eine Ausgestaltung der Erfindung sieht im Kältemittelkreislauf 40 weitere Ventile mit Regel- bzw. Sicherheitsfunktionen vor (Fig. 2). So ist nach dem Verdichter 50 ein stufenlos regelbares Drosselventil 74 angeordnet, mit dessen Hilfe kann ein höherer Verdichtungsenddruck erzeugt werden, der es ermöglicht, eine größere Wärmemenge in den Kühlflüssigkeitskreislauf 12 einzukoppeln. Nach dem Verdichter 50 wird der Druck wieder auf den zulässigen Druck im Koppelwärmetauscher 38 abgebaut.

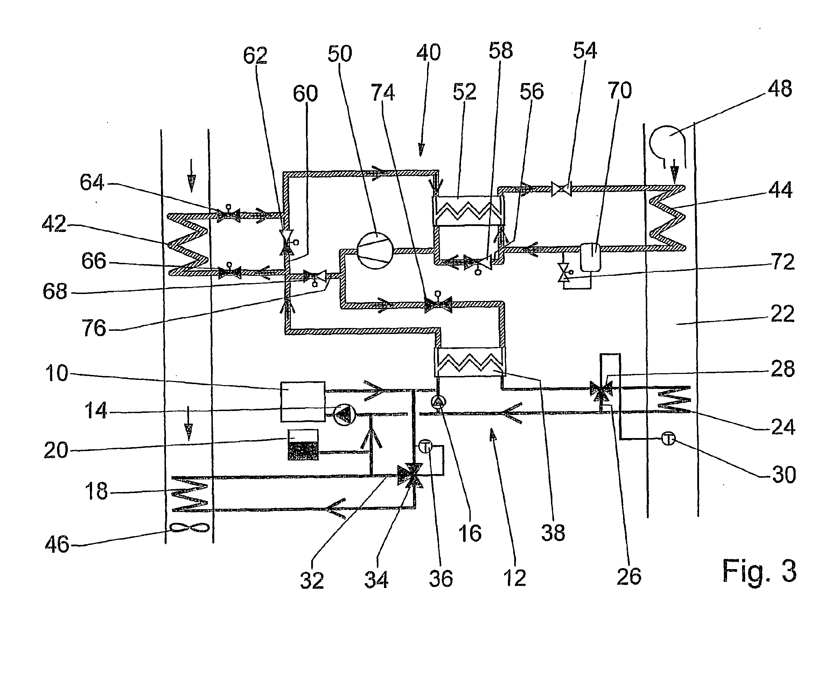

Im Kühlbetrieb arbeitet die Klimaanlage entsprechend der Darstellung in Fig. 3. In diesem Betriebszustand fördert der Verdichter 50 das Kältemittel über den Koppelwärmetauscher 38 durch den Gaskühler 42. Das Drosselventil 74 und die Schaltventile 64 und 66 am Ausgang und Eingang des Gaskühlers 42 sind geöffnet, während das Schaltventil 62 in der Bypassleitung 60 parallel zum Gaskühler 42 geschlossen ist. In einer vereinfachten Ausführung ist das Schaltventil 64 als Rückschlagventil ausgebildet. Somit wird das Kältemittel zunächst im Koppelwärmetauscher 38 und dann im Gaskühler 42 gekühlt. Wenn die Umstände eine Kühlung im Koppelwärmetauscher 38 erübrigen, kann der Koppelwärmetauscher 38 über eine Bypassleitung 76 mit einem Schaltventil 68 kurz geschlossen werden.

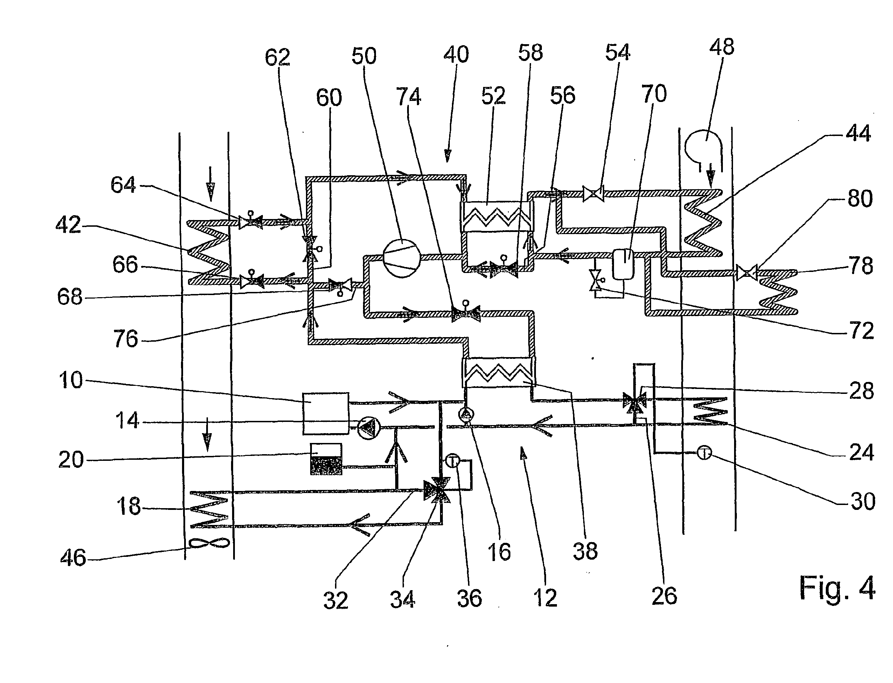

Beim Umschalten der Klimaanlage vom Kühl- in den Heizbetrieb muss das flüssige Kältemittel aus dem Gaskühler 42 gefördert werden, so dass es im arbeitenden Bereich der Klimaanlage genutzt werden kann. Hierzu ist das Schaltventil 62 während des Heizbetriebs kurzzeitig geschlossen und das Schaltventil 64 geöffnet. Das Kältemittel wird durch Öffnen des Expansionsventils 54 dann so lange angesaugt, bis der Druck am Austritt des Verdichters 50 einen Sollwert erreicht hat. Auf Grund dieses Betriebsparameters öffnet das Schaltventil 62 in der Bypassleitung 60 wieder und das Schaltventil 64 schließt. Wird der Sollwert während des Heizbetriebs unterschritten, wird dieser Vorgang wiederholt. Um die Heizleistung zu verbessern, kann im Kältemittelkreislauf 12 parallel zum Verdampfer 44 ein weiterer Verdampfer 78 angeordnet werden (Fig. 4). Diese zusätzliche Wärmequelle kann beispielsweise durch Außenluft umströmt werden, ohne dass die Kühlung der Brennkraftmaschine 10 durch Vereisen dieses Wärmetauschers gefährdet ist. Vor dem weiteren Verdampfer ist ein zweites Expansionsventil 80 angeordnet.

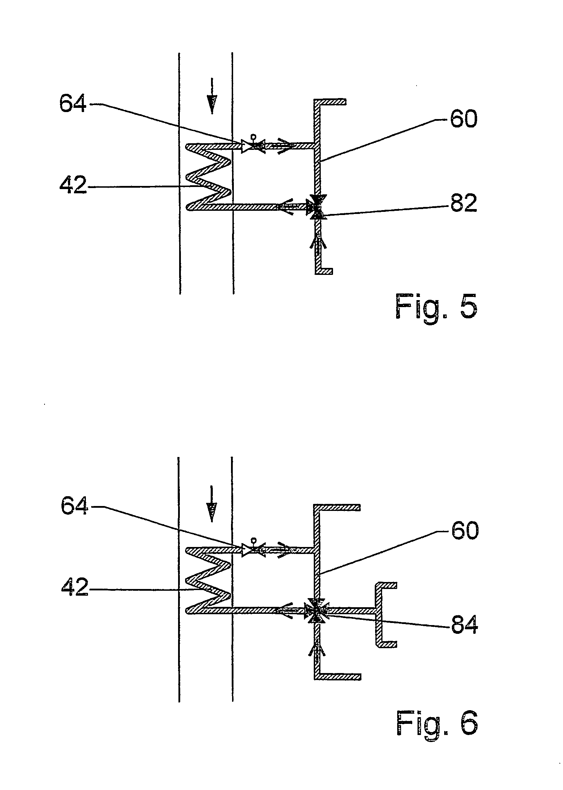

Nach einer vereinfachten Ausgestaltung der Erfindung können die Schaltventile 62 und 66 zu einem 3/2-Wegeventil 82 zusammengefasst werden (Fig. 5). In einer ersten Stellung verbindet das 3/2-Wegeventil 82 im Kühlbetrieb den Koppelwärmetauscher 38 mit dem Gaskühler 42, während die Bypassleitung 60 gesperrt ist. In einer zweiten Stellung verbindet das 3/2-Wegeventil 82 im Heizbetrieb den Koppelwärmetauscher 38 mit der Bypassleitung 60, während der Gaskühler 42 gesperrt ist. In einer dritten Stellung verbindet das 3/2-Wegeventil 82 beim Umschalten auf den Heizbetrieb den Gaskühler 42 mit der Bypassleitung 60, während die Leitung vom Koppelwärmetauscher 38 gesperrt ist.

Bei einer weiteren vereinfachten Variante (Fig. 6) können die Schaltventile 62 und 66 und das Schaltventil 68 zu einem 4/2-Wegeventil 84 zusammengefasst werden, wobei in zwei einander gegenüber liegenden Stellungen des 4/2-Wegeventils 84 die Bypassleitung 76 parallel zum Koppelwärmetauscher 38 im Kühlbetrieb mit dem Gaskühler 42 und in den zwei übrigen Stellungen der Koppelwärmetauscher 38 im Heizbetrieb mit der Bypassleitung 60 parallel zum Gaskühler 42 verbunden sind.

### Bezugszeichen

- 10: Brennkraftmaschine
- 12: Kühlflüssigkeitskreislauf
- 14: Kühlflüssigkeitspumpe
- 16: Zusätzl. Kühlflüssigkeitspumpe
- 18: Kühler
- 20: Ausgleichsgefäß
- 22: Klimagerät
- 24: Heizungswärmetauscher
- 26: Bypassleitung
- 28: Heizungsregelventil
- 30: Temperatursensor
- 32: Bypassleitung
- 34: Dreiwegeventil
- 36: Temperatursensor
- 38: Koppelwärmetauscher
- 40: Kältemittelkreislauf
- 42: Gaskühler
- 44: Verdampfer
- 46: Lüfter
- 48: Gebläse
- 50: Verdichter
- 52: innerer Wärmetauscher
- 54: Expansionsventil
- 56: Bypassleitung
- 58: Sicherheitsventil
- 60: Bypassleitung
- 62: Schaltventil
- 64: Schaltventil
- 66: Schaltventil
- 68: Schaltventil
- 70: Sammler
- 72: Ventil
- 74: Drosselventil
- 76: Bypassleitung
- 78: weiterer Verdampfer
- 80: Schaltventil
- 82: 3/2-Wegeventil
- 84: 4/2-Wegeventil

## Patentansprüche

1. Klimaanlage für ein Fahrzeug, das von einer Brennkraftmaschine (10) angetrieben wird, mit einem an einem Kühlflüssigkeitskreislauf (12) der Brennkraftmaschine (10) angeschlossenen Heizungswärmetauscher (24), dem in Strömungsrichtung eines Gebläses (48) ein Verdampfer (44) vorgeschaltet ist, zu dem ein Verdichter (50) in einem Kältemittelkreislauf (40) ein Kältemittel über ein Expansionsventil (54) fördert, wobei während eines Kühlbetriebs das Kältemittel über einen Gaskühler (42) sowie während eines Heizbetriebs unter Umgehen des Gaskühlers (42) durch eine Bypassleitung (60) zum Expansionsventil (54) und danach zum Verdampfer (44) strömt und zwischen dem Kühlflüssigkeitskreislauf (12) und dem Kältemittelkreislauf (40) ein Koppelwärmetauscher (38) vorgesehen ist, der auf der Seite des Kältemittelkreislaufs (40) auf der Druckseite des Verdichters (50) vor dem Gaskühler (42) und der Bypassleitung (60) angeordnet ist, wobei der Durchfluss durch den Gaskühler (42) und die Bypassleitung (60) durch ein Schaltventil (62) in der Bypassleitung (60) und durch jeweils ein Schaltventil (64, 66) am Eingang bzw. Ausgang des Gaskühlers (42) in Abhängigkeit von Betriebsparametern gesteuert wird, **dadurch gekennzeichnet, dass**
der Koppelwärmetauscher (38) auf der Seite des Kühlfñlüssigkeitskreislaufs (12) zwischen der Brennkraftmaschine (10) und dem Heizungswärmetauscher (24) geschaltet ist und im Heizbetrieb die Klimaanlage (38, 44, 50, 54) als Wärmepumpe betreibbar ist, wobei der Verdampfer (44) als Wärmequelle für den Kältemittelkreislauf dient, indem das Kältemittel in dem Expansionsventil (54) so stark abkühlbar ist, dass es im Verdampfer (44) die beim Trocknen der Luft anfallende Wärme aufnimmt.

2. Klimaanlage nach Anspruch 1, **dadurch gekennzeichnet, dass** das Kältemittel ein Mittel ist, bei dem die Wärmeabgabe mit überkritischem Druck erfolgt.

3. Klimaanlage nach Anspruch 2, **dadurch gekennzeichnet, dass** das Kältemittel Kohlendioxid ist.

4. Klimaanlage nach einem der vorhergehenden Ansprüche, **dadurch gekennzeichnet, dass** das Schaltventil (64) am Ausgang des Gaskühlers (42) als Rückschlagventil ausgebildet ist.

5. Klimaanlage nach einem der vorhergehenden Ansprüche, **dadurch gekennzeichnet, dass** der Heizungswärmetauscher (24) durch eine Bypassleitung (26) überbrückt ist, an deren Abzweigung ein von der Temperatur der Heizluft gesteuertes Heizungsregelventil (28) angeordnet ist.

6. Klimaanlage nach einem der vorhergehenden Ansprüche, **dadurch gekennzeichnet, dass** auf der Seite des Kältemittelkreislaufs (40) vor dem Koppelwärmetauscher (38) ein Drosselventil (74) vorgesehen ist.

7. Klimaanlage nach Anspruch 6, **dadurch gekennzeichnet, dass** vor dem Drosselventil (74) eine Bypassleitung (76) abzweigt, die den Koppelwärmetauscher (38) überbrückt und ein Schaltventil (68) aufweist.

8. Klimaanlage nach Anspruch 7, **dadurch gekennzeichnet, dass** das Schaltventil (62) in der dem Gaskühler (42) zugeordneten Bypassleitung (26), das Schaltventil (66) am Eingang des Gaskühlers (42) und das Schaltventil (68) in der dem Koppelwärmetauscher (38) zugeordneten Bypassleitung (76) zu einem 4/2-Wegeventil (84) zusammengefasst sind.

9. Klimaanlage nach einem der vorhergehenden Ansprüche, **dadurch gekennzeichnet, dass** der Koppelwärmetauscher (38) nach dem Gegenstromprinzip arbeitet.

10. Klimaanlage nach einem der vorhergehenden Ansprüche, **dadurch gekennzeichnet, dass** der Koppelwärmetauscher (38) in Mikrostruktur hergestellt ist.

11. Klimaanlage nach einem der vorhergehenden Ansprüche, **dadurch gekennzeichnet, dass** in Strömungsrichtung hinter dem Gaskühler (42) ein innerer Wärmetauscher (52) angeordnet ist, der im Gegenstromprinzip zum einen von dem verdichteten Kältemittel und zum anderen von dem entspannten Kältemittel nach dem Verdampfer (44) durchströmt wird, wobei parallel zum inneren Wärmetauscher (52) eine Bypassleitung (56) mit einem Sicherheitsventil (58) geschaltet ist.

12. Klimaanlage nach einem der vorhergehenden Ansprüche, **dadurch gekennzeichnet, dass** parallel zum Verdampfer (44) ein weiterer Verdampfer (78) vorgesehen ist, der der Außenluft ausgesetzt ist.

13. Verfahren zum Betrieb einer Klimaanlage nach einem der vorhergehenden Ansprüche, **dadurch gekennzeichnet, dass** beim Wechsel vom Kühlbetrieb auf den Heizbetrieb das Schaltventil (66) am Zulauf zum Gaskühler (42) und das Schaltventil (62) in der Bypassleitung (60) des Gaskühlers (42) so lange geschlossen sind, während das Schaltventil (64) am Ausgang des Gaskühlers (42) und das Expansionsventil (54) geöffnet sind, bis der Druck am Austritt des Verdichters (50) einen oberen Sollwert erreicht hat, worauf das Schaltventil (62) in der Bypassleitung (60) öffnet und das Schaltventil (64) am Ausgang des Gaskühlers (42) schließt, bis der Druck am Austritt des Verdichters (50) auf einen unteren Sollwert abgefallen ist.

## Claims

1. Air-conditioning system for a vehicle which is driven by an internal combustion engine (10), with a heating heat exchanger (24) which is connected to a cooling-liquid circuit (12) of the internal combustion (10) and which is preceded in the direction of flow of a blower (48) by an evaporator (44), to which a compressor (50) in a refrigerant circuit (40) conveys a refrigerant via an expansion valve (54), the refrigerant flowing to the expansion valve (54) via a gas cooler (42), during cooling operation, and bypassing the gas cooler (42), through a bypass line (60), during heating operation, and thereafter flowing to the evaporator (44), there being provided between the cooling-liquid circuit (12) and the refrigerant circuit (40) a coupling heat exchanger (38) which is arranged, on the side of the refrigerant circuit (40), on the delivery side of the compressor (50) upstream of the gas cooler (42) and of the bypass line (60), the throughflow through the gas cooler (42) and the bypass line (60) being controlled by a switching valve (62) in the bypass line (60) and by a switching valve (64, 66) in each case at the inlet and at the outlet of the gas cooler (42) as a function of operating parameters, **characterized in that**, on the side of the cooling-liquid circuit (12), the coupling heat exchanger (38) is inserted between the internal combustion engine (10) and the heating heat exchanger (24), and, in heating operation, the air-conditioning system (38, 44, 50, 54) can be operated as a heat pump, the evaporator (44) serving as a heat source for the refrigerant circuit, **in that** the refrigerant can be cooled in the expansion valve (54) to an extent such that it absorbs in the evaporator (44) the heat occurring during the drying of the air.

2. Air-conditioning system according to Claim 1,
**characterized in that** the refrigerant is a medium in which the emission of heat takes place at supercritical pressure.

3. Air-conditioning system according to Claim 2,
**characterized in that** the refrigerant is carbon dioxide.

4. Air-conditioning system according to one of the preceding claims, **characterized in that** the switching valve (64) at the outlet of the gas cooler (42) is designed as a non-return valve.

5. Air-conditioning system according to one of the preceding claims, **characterized in that** the heating heat exchanger (24) is bridged by a bypass line (26), at the branching-off of which is arranged a heating regulating valve (28) controlled by the temperature of the heating air.

6. Air-conditioning system according to one of the preceding claims, **characterized in that** a throttle valve (74) is provided, on the side of the refrigerant circuit (40), upstream of the coupling heat exchanger (38).

7. Air-conditioning system according to Claim 6, **characterized in that**, upstream of the throttle valve (74), a bypass line (76) branches off, which bridges the coupling heat exchanger (38) and has a switching valve (68).

8. Air-conditioning system according to Claim 7,
**characterized in that** the switching valve (62) in the bypass line (26) assigned to the gas cooler (42), the switching valve (66) at the inlet of the gas cooler (42) and the switching valve (68) in the bypass line (76) assigned to the coupling heat exchanger (38) are combined into a 4/2-way valve (84).

9. Air-conditioning system according to one of the preceding claims, **characterized in that** the coupling heat exchanger (38) operates on the countercurrent principle.

10. Air-conditioning system according to one of the preceding claims, **characterized in that** the coupling heat exchanger (38) is produced as a microstructure.

11. Air-conditioning system according to one of the preceding claims, **characterized in that**, downstream of the gas cooler (42) in the direction of flow, an internal heat exchanger (52) is arranged, through which, on the one hand, the compressed refrigerant and, on the other hand, the expanded refrigerant downstream of the evaporator (44) flow on the countercurrent principle, a bypass line (56) with a safety valve (58) being connected in parallel with the internal heat exchanger (52).

12. Air-conditioning system according to one of the preceding claims, **characterized in that** a further evaporator (78) which is exposed to the outside air is provided in parallel with the evaporator (44).

13. Method for operating an air-conditioning system according to one of the preceding claims, **characterized in that**, in the changeover from cooling operation to heating operation, the switching valve (66) at the inflow to the gas cooler (42) and the switching valve (62) in the bypass line (60) of the gas cooler (42) are closed, while the switching valve (64) at the outlet of the gas cooler (42) and the expansion valve (54) are open, until the pressure at the exit of the compressor (50) has reached an upper desired value, whereupon the switching valve (62) of the bypass line (60) opens and the switching valve (64) at the outlet of the gas cooler (42) closes, until the pressure at the exit of the compressor (50) has fallen to a lower desired value.

## Revendications

1. Installation de climatisation pour un véhicule, qui est entraîné par un moteur à combustion interne (10), comprenant un échangeur de chaleur de chauffage (24) raccordé à un circuit de liquide de refroidissement (12) du moteur à combustion interne (10), en amont duquel est monté, dans le sens de l'écoulement d'un ventilateur (48), un évaporateur (44) auquel un compresseur (50) refoule un fluide frigorigène par le biais d'une soupape d'expansion (54) dans un circuit de fluide frigorigène (40), le fluide frigorigène, en mode de refroidissement, s'écoulant par le biais d'un radiateur à gaz (42) ainsi qu'en mode de chauffage, en contournant le radiateur à gaz (42), à travers une conduite de dérivation (60) jusqu'à la soupape d'expansion (54) et ensuite jusqu'à l'évaporateur (44), et un échangeur de chaleur d'accouplement (38) étant prévu entre le circuit de liquide de refroidissement (12) et le circuit de fluide frigorigène (40), lequel est disposé du côté du circuit de fluide frigorigène (40) du côté pression du compresseur (50) avant le radiateur à gaz (42) et la conduite de dérivation (60), le débit à travers le radiateur à gaz (42) et la conduite de dérivation (60) étant commandé par une soupape de commutation (62) dans la conduite de dérivation (60) et par une soupape de commutation respective (64, 66) à l'entrée, respectivement à la sortie du radiateur à gaz (42), en fonction de paramètres de fonctionnement, **caractérisée en ce que**
l'échangeur de chaleur d'accouplement (38) est monté du côté du circuit de liquide de refroidissement (12) entre le moteur à combustion interne (10) et l'échangeur de chaleur de chauffage (24) et l'installation de climatisation (38, 44, 50, 54) peut être utilisée comme pompe à chaleur en mode de chauffage, l'évaporateur (44) servant de source de chaleur pour le circuit de fluide frigorigène, **en ce que** le fluide frigorigène peut être refroidi dans la soupape d'expansion (54) dans une mesure telle qu'il reçoive dans l'évaporateur (44) la chaleur produite lors du séchage de l'air.

2. Installation de climatisation selon la revendication 1, **caractérisée en ce que** le fluide frigorigène est un fluide dans lequel la diffusion de chaleur a lieu à une pression surcritique.

3. Installation de climatisation selon la revendication 2, **caractérisée en ce que** le fluide frigorigène est du dioxyde de carbone.

4. Installation de climatisation selon l'une quelconque des revendications précédentes, **caractérisée en ce que** la soupape de commutation (64) à la sortie du radiateur à gaz (42) est réalisée sous forme de soupape de non retour.

5. Installation de climatisation selon l'une quelconque des revendications précédentes, **caractérisée en ce que** l'échangeur de chaleur de chauffage (24) est ponté par une conduite de dérivation (26) au niveau de la ramification de laquelle est disposée une soupape de régulation du chauffage (28) commandée par la température de l'air de chauffage.

6. Installation de climatisation selon l'une quelconque des revendications précédentes, **caractérisée en ce que** du côté du circuit de fluide frigorigène (40) avant l'échangeur de chaleur d'accouplement (38) est prévue une soupape d'étranglement (74).

7. Installation de climatisation selon la revendication 6, **caractérisée en ce qu'**avant la soupape d'étranglement (74), part une conduite de dérivation (76) qui ponte l'échangeur de chaleur d'accouplement (38) et qui présente une soupape de commutation (68).

8. Installation de climatisation selon la revendication 7, **caractérisée en ce que** la soupape de commutation (62) dans la conduite de dérivation (26) associée au radiateur à gaz (42), la soupape de commutation (66) à l'entrée du radiateur à gaz (42) et la soupape de commutation (68) dans la conduite de dérivation (76) associée à l'échangeur de chaleur d'accouplement (38) sont rassemblées pour former une soupape à 4/2 voies (84).

9. Installation de climatisation selon l'une quelconque des revendications précédentes, **caractérisée en ce que** l'échangeur de chaleur d'accouplement (38) fonctionne selon le principe des contre-courants.

10. Installation de climatisation selon l'une quelconque des revendications précédentes, **caractérisée en ce que** l'échangeur de chaleur d'accouplement (38) est fabriqué dans une microstructure.

11. Installation de climatisation selon l'une quelconque des revendications précédentes, **caractérisée en ce que** dans la direction de l'écoulement derrière le radiateur à gaz (42), est disposé un échangeur de chaleur interne (52), qui est parcouru, selon un principe de contre-courant, d'une part par le fluide frigorigène comprimé et d'autre part par le fluide frigorigène détendu après l'évaporateur (44), une conduite de dérivation (56) avec une soupape de sécurité (58) étant montée en parallèle avec l'échangeur de chaleur interne (52).

12. Installation de climatisation selon l'une quelconque des revendications précédentes, **caractérisée en ce que** parallèlement à l'évaporateur (44), on prévoit un évaporateur supplémentaire (78), qui est exposé à l'air extérieur.

13. Procédé pour faire fonctionner une installation de climatisation selon l'une quelconque des revendications précédentes, **caractérisé en ce que** lors du passage du mode de refroidissement au mode de chauffage, la soupape de commutation (66) à l'entrée du radiateur à gaz (42), et la soupape de commutation (62) dans la conduite de dérivation (60) du radiateur à gaz (42), sont fermées, pendant que la soupape de commutation (64) à la sortie du radiateur à gaz (42) et la soupape d'expansion (54) sont ouvertes, tant que la pression à la sortie du compresseur (50) n'a pas atteint une valeur de consigne supérieure, après quoi la soupape de commutation (62) dans la conduite de dérivation (60) s'ouvre et la soupape de commutation (64) à la sortie du radiateur à gaz (42) se ferme, jusqu'à ce que la pression à la sortie du compresseur (50) soit tombée à une valeur de consigne inférieure.
